# EUROPÄISCHE PATENTANMELDUNG

(11) **EP 0 986 193 A1**
(43) Veröffentlichungstag der Anmeldung: **15.03.2000**
(21) Anmeldenummer: 98810781.9
(22) Anmeldetag: 14.08.1998
(51) Int. Cl.: H04B 7/08, H04L 1/06

(54) **Verfahren zum Schaltungsanordung zum Kompensieren von Fehlern beim Einstellen von Combining-Koeffizienten einer Diversity-Combing-Schaltung**

(71) Anmelder: Ascom Systec AG, 5506 Mägenwil (CH)
(72) Erfinder: Kuhn, Michael, 66133 Saarbrücken-Scheidt (DE)
(74) Vertreter: Roshardt, Werner Alfred, Dipl.-Phys.

(57) **Zusammenfassung**

Ein Verfahren zum Kompensieren von Fehlern beim Einstellen von Combining-Koeffizienten einer Combining-Schaltung (3) für eine Mehrzahl von Antennen (1.1, 1.2, 1.3) zeichnet sich dadurch aus, daß größere Toleranzen und Imperfektionen eines Combiners automatisch und iterativ ermittelt werden können. Im normalen Betriebsmodus können infolgedessen die vorgegebenen (vorzugsweise optimalen) Combining-Koeffizienten korrekt eingestellt werden. Während den Sende- bzw. Empfangspausen werden mehrere verschiedene Combining-Koeffizienten eingestellt. Ein Testsignal wird über die Combining-Schaltung (3) geführt, so daß anhand des Testsignals ein Meßwert des jeweiligen Combining-Koeffizienten bestimmt und abgespeichert werden kann.

## Beschreibung

### Technisches Gebiet

Die Erfindung betrifft ein Verfahren zum Kompensieren von Fehlern beim Einstellen von Combining-Koeffizienten einer Combining-Schaltung für eine Mehrzahl von Antennen sowie eine Schaltungsanordnung zur Durchführung des Verfahrens.

### Stand der Technik

Funkkanäle mit Mehrwegausbreitung führen bei hohen Datenraten zu ausgeprägten Intersymbol Interferenzen (ISI). Dieses Problem ist z.B. auch bei der digitalen Kommunikation auf der Basis des HIPERLAN Standards vorhanden. Dabei werden Daten mit einer Rate von 23.5 Mbps (Mega Bit pro Sekunde) lokal zwischen Computern übertragen. Die Trägerfrequenz liegt im Bereich von 5.1 bis 5.3 GHz.

Die Leistungsfähigkeit des Systems hängt von der Fähigkeit des Empfängers ab, die ISI zu kompensieren und damit die Fehlerrate zu minimieren. Zu diesem Zweck kann versucht werden, auf digitaler Ebene eine möglichst genaue Schätzung der Kanalstoss-Antwort zu ermitteln. Eine leistungsfähige digitale Kanalentzerrung bedingt jedoch einen hohen Rechenaufwand und einen entsprechend hohen Stromverbrauch im Empfänger.

Es wurde deshalt schon vorgeschlagen, den Empfänger mit einer Mehrzahl von Antennen auszurüsten (engl. Antenna Diversity) und diejenige Antenne mit dem stärksten Signal für den Empfang zu verwenden. Bekannt ist auch das gewichtete Kombinieren der verschiedenen Antennensignale nach der Massgabe, dass das resultierende Signal eine grösstmögliche Leistung hat. Zu diesem Zweck weist der Empfänger ein einstellbares analoges Summiernetzwerk (Combiner) auf, mit welchem die einzelnen Antennensignale vor dem Addieren in Betrag und Phase verändert werden können. Die entsprechenden Koeffizienten werden zuvor digital berechnet mit einem Fuzzy-logic Algorithmus. Der Vorteil dieser Empfängerstruktur besteht darin, dass wegen der hochfrequenten (analogen) Addition der Signale nur ein einziger Demodulator und Entzerrer notwendig ist. Dies wirkt sich vorteilhaft auf die Produktionskosten auf.

Die Herstellungskosten des Combiners werden massgeblich durch die jeweiligen Toleranzen der Verstärkungs- und Phasenschieberkennlinien der einzelnen Koeffizienten bestimmt. Kostengünstige Schaltungen haben größere Toleranzbereiche und sind daher mit mehr Imperfektionen behaftet. Die bekannten Fuzzy-Logic Algorithmen haben den Vorteil, dass sie nicht empfindlich auf solche Kennlinienungenauigkeiten sind, weil sie in einem gewissen Sinn "Trial and Error"- Verfahren sind.

Wenn dagegen optimale Combining-Koeffizienten gezielt berechnet und eingestellt werden sollen, kann die Performance durch grosse Kennlinientoleranzen empfindlich gestört werden.

### Darstellung der Erfindung

Aufgabe der Erfindung ist es, ein Verfahren der eingangs genannten Art anzugeben, welches eine präzise Einstellung von berechneten bzw. vorgegebenen Combining-Koeffizienten auch dann erlaubt, wenn grössere hardwaremässige Kennlinientoleranzen vorhanden sind.

Die Lösung der Aufgabe ist durch die Merkmale des Anspruchs 1 definiert. Gemäss der Erfindung wird in einer Sende- bzw. Empfangspause vom Sender bzw. Empfänger ein Testsignal erzeugt und ein entsprechender Messwert in einer Kompensationswertetabelle abgelegt, um beim späteren Einstellen eines Combining-Koeffizienten berücksichtigt zu werden.

Das Gerät (z. B. ein HIPERLAN-Empfänger) kann also von einem normalen Betriebsmodus (Empfangsmodus) in einen Kalibrierungsmodus wechseln. Dabei werden verschiedene Combining-Koeffizienten eingestellt und die effektive Einstellung von Amplitude und Phase gemessen. Die Ergebnisse werden in einem Speicher abgelegt, auf welchen im normalen Betriebsmodus zurückgegriffen wird. Unabhängig von der Größe der Fertigungstoleranz ist es daher möglich, die konkrete Kennlinie jedes Phasenschiebers und Verstärkers der Combining-Schaltung zu jedem gewünschten Zeitpunkt zu messen. Neben den anfänglichen Toleranzen können auch alterungsbedingte Veränderungen erfaßt werden.

Das Testsignal ist vorzugsweise ein unmoduliertes Trägersignal, welches vom lokalen Oszillator des Gerätes erzeugt wird. Dadurch wird ein Frequenzoffset bei der Messung vermieden.

Das Testsignal kann über eine zusätzliche Sendeantenne des Geräts abgestrahlt werden. Bei einer der Empfangsantennen des Arrays wird ein bestimmter Combining-Koeffizient (z. B. Phase ϕ = 0, Betrag |c| = 1) vorgegeben. Bei allen anderen Empfangsantennen wird eine maximale Dämpfung eingestellt. Der gemessene Wert wird abgespeichert. Durch Variieren der Vorgabe können die gewünschten Stützwerte der Kennlinie bestimmt werden. Auf diese Weise kann die effektive Kennlinie ermittelt werden.

Gemäss einer anderen, besonders bevorzugten Ausführungsform wird das Testsignal leitungsgebunden eingespeist. Dies kann direkt am Antennenfusspunkt oder unmittelbar vor der Combining-Schaltung (also nach der Eingangsverstärkung) erfolgen.

Die Kalibrierung kann sporadisch oder regelmässig erfolgen. Mit Vorteil ist ein geeigneter Automatismus vorgesehen, welcher sicherstellt, daß umstandsbedingte Veränderungen erfaßt werden (z. B. durch Messung der Betriebsstunden, der Temperaturen etc.)

Die Erfindung kann software- und/oder hardwaremäßig implementiert werden. Vorzugsweise sind Leitungen vorgesehen, über welche das (hochfrequente) Testsignal (ohne Umweg über Antennen) mehr oder wenig direkt in die Combining-Schaltung eingespeist werden kann.

Die Erfindung eignet sich zum Beispiel zum Empfangen von OAM- oder GMSK-modulierten Signalen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendete Zeichnung zeigt:

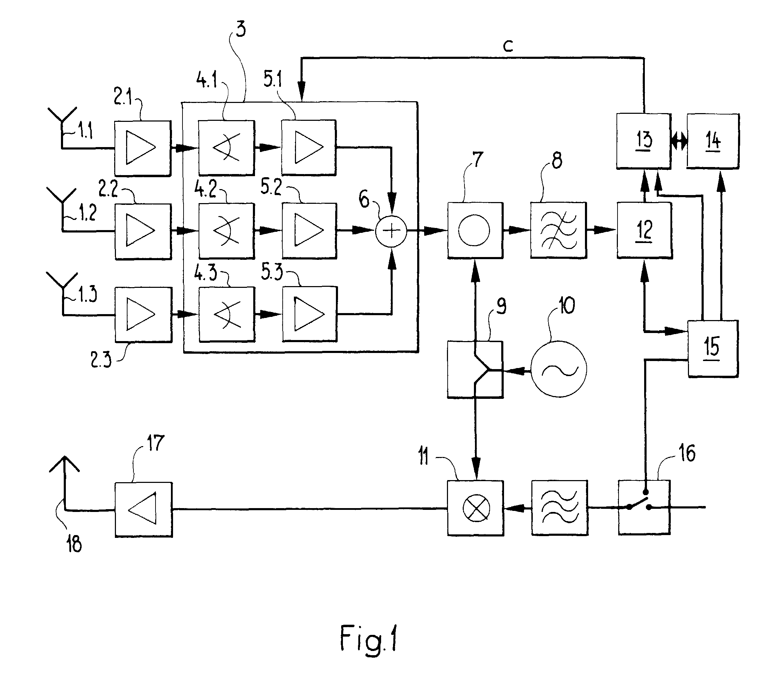

- Fig. 1: ein Blockschaltbild eines Empfängers zum Kalibrieren der Kennlinie der Combining-Koeffizienten.

### Wege zur Ausführung der Erfindung

Fig. 1 zeigt ein Blockschaltbild eines Empfängers zur Durchführung des erfindungsgemäßen Verfahrens. Eine Reihe von z. B. drei Empfangsantennen 1.1, 1.2, 1.3 dient im normalen Betriebsmodus zum optimierten Empfangen des von einem entfernten Sender übertragenen Funksignals. Zu jeder Empfangsantenne 1.1, 1.2, 1.3 gehört ein rauscharmer Verstärker 2.1, 2.2, 2.3 (Low Noise Amplifier). Eine anschließende Combining-Schaltung 3 verfügt über je einen Phasenschieber 4.1, 4.2, 4.3 und je ein Dämpfungsglied 5.1, 5.2, 5.3 pro Empfangsantenne. Ein Summierglied 6 kombiniert die Signale und führt das Summensignal einem Mischer 7 zu. Ein ZF-Filter 8 transformiert das der Trägerschwingung aufmodulierte Signal ins Basisband. Ein lokaler Oszillator 10 speist über einen Leistungsteiler 9 sowohl den Mischer 7 als auch den Modulator 11. Der Senderteil verfügt neben dem Modulator 11 über einen Verstärker 17 und eine Sendeantenne 18.

Die soeben beschriebenen Komponenten sind bei einem Antenna-Diversity Empfänger üblich. Neu sind die Funktionen der Elemente: Messwertdetektor 12, Koeffizientengeber 13, Kennlinienspeicher 14, Umschalter 16 und Steuerung 15.

Im Normalfall funktioniert die Schaltungsanordnung wie ein gewöhnlicher Empfänger. Das heißt, es werden zum Beispiel HIPERLAN-Signale empfangen und demoduliert. Für einen bestmöglichen Empfang werden dabei die über die verschiedenen Empfangsantennen 1.1, 1.2, 1.3 eintreffenden Signale in der Combining-Schaltung 3 hinsichtlich Phasenlage und Amplitude (Verstärkung) derart verändert, daß lntersymbol-lnterferenz bei der nachfolgenden Detektion im Wesentlichen vermieden werden kann. Die Kombination der Signale erfolgt auf HF-Stufe. Die Mischung mit der Trägerfrequenz und die Extraktion des Basisbandsignals folgen erst nachher. Die Koeffizienten c, welche die Phasenlage und Amplitude der Antennensignale verändern, werden für jedes Datenpaket anhand der Trainingssequenz (vorgängig zur Datendetektion) im Empfänger auf digitaler Ebene berechnet. Die Berechnung der Combining-Koeffizienten c kann nach unterschiedlichen Kriterien erfolgen. Gemäß einer besonders bevorzugten Ausführungsform werden die Koeffizienten für ein QAM- oder ein GMSK-Signal so gewählt, daß der Realteil des mittleren quadratischen Fehlers zwischen dem gestörten Empfangssignal und dem geschätzten Sendesignal minimiert ist.

Die vorhandene Fertigungstoleranz der Combining-Schaltung 3 führt an sich dazu, daß die berechneten und einzustellenden Koeffizienten nicht (bzw. nur bedingt) mit den effektiv zur Anwendung kommenden Werten übereinstimmen. Hier schafft nun die Erfindung Abhilfe.

In einer Sende- und Empfangspause führt die Steuerung 15 in der nachfolgend beschriebenen Weise eine Kalibrierung der Kennlinien der Phasenschieber 4.1, 4.2, 4.3 und der Dämpfungsglieder 5.1, 5.2, 5.3 durch.

Über den Umschalter 16 wird ein Testsignal auf den Modulator 11 gegeben. Vorzugsweise handelt es sich um ein neutrales Signal, so daß die vom Verstärker 17 angesteuerte Sendeantenne 18 eine dem lokalen Oszillator 10 entsprechende Trägerschwingung abstrahlt. Weil die Empfangsantennen 1.1, 1.2, 1.3 in unmittelbarer Nähe zur Sendeantenne 18 sind, kann die Leistung der Trägerschwingung sehr klein sein.

Zum Aufnehmen der Kennlinie des Phasenschiebers 4.1 beispielsweise werden einerseits das dazugehörige Dämpfungsglied 5.1 auf minimale Dämpfung und andererseits die übrigen Dämpfungsglieder 5.2, 5.3 auf maximale Dämpfung eingestellt. Es ist also nur der Signalpfad über die Empfangsantenne 1.1 offen. Danach werden nacheinander eine Mehrzahl von Phasenlagen beim Phasenschieber 4.1 eingestellt. Der Messwertdetektor 12 berechnet den effektiven Wert des Testsignals, welcher aufgrund eines Sollwertes von der Steuerung 15 via Koeffizientengeber 13 eingestellt worden ist. Dieser Wert wird im Kennlinienspeicher 14 in einer Tabelle abgespeichert.

Nach diesem Schema werden die Kennlinien der verschiedenen Schaltungselemente (Phasenschieber und Dämpfungsglieder) individuell aufgenommenen. Am Ende des Testvorgangs stehen die aktuellen Kennlinien bzw. die Abweichungen der effektiven von den theoretisch vorgegebenen Kennlinien zur Verfügung. Im normalen Betriebsmodus (Datenempfang) wird ein digital berechneter Combining-Koeffizient unter Berücksichtigung der im Kennlinienspeicher 14 abgespeicherten Korrekturen eingestellt.

Der Vorteil der beschriebenen Ausführungsform liegt darin, daß das erfindungsgemäße Verfahren im Wesentlichen mit bestehenden Hardware von Sender/Empfänger-Geräten implementiert werden kann, das heißt daß die Erfindung im Wesentlichen softwaremäßig verwirklicht werden kann. Die Kosten, welche mit dem Entwurf neuer Schaltungen verbunden sind, können vermieden werden. Ferner wird durch die Identität des Sender- und Empfängeroszillators ein Frequenzoffset von vornherein vermieden.

Das Testsignal kann aber auch leitungsgebunden eingespeist werden. Das heißt es wird nicht über die Sendeantenne 18 abgestrahlt, sondern zum Beispiel beim Antennenfusspunkt oder auch erst nach den Verstärkern 2.1, 2.2, 2.3 (d. h. unmittelbar vor der Combining-Schaltung 3). Das entsprechende Einspeisen erfordert zwar zusätzliche Schalter, vermeidet aber die Störungen, welche bei der Funkübertragung hinzukommen.

Das Testsignal braucht nicht unbedingt lokal vom gleichen Sender/Empfänger-Gerät erzeugt zu werden. Es ist auch denkbar, daß es von einem anderen Gerät an den Empfänger übertragen wird. In einem solchen Fall ist zu beachten, daß eine Differenz zwischen der Trägerschwingung und dem lokalen Oszillator bestehen kann (Frequenz-Offset). Bei der Kalibrierung ist diese Frequenz-Offset vorgängig zu bestimmen und zu berücksichtigen.

Die Erfindung beschränkt sich nicht auf das Kompensieren von empfängerseitigen Fehlern. Es sind zum Beispiel auch Anwendungen denkbar, bei welchen mehrere nebeneinander angeordnete Sendeantennen mit dem gleichen Signal angesteuert werden, wobei mit Phasenschiebern gezielt Phasendifferenzen eingeführt werden, um die Richtung des abgestrahlten Signals einstellen zu können. Fehler bei den Koeffizienten können in einem solchen Fall zu einer fehlerhaften Abstrahlcharakteristik führen.

Eine solche Reihe von Sendeantennen kann quasi in umgekehrter Richtung geprüft werden. Das heißt es wird ein Testsignal über einen Pfad der Combining-Schaltung und die entsprechende Antenne abgestrahlt. Eine am Gerät angebrachte Empfangsantenne empfängt das Signal und ermöglicht es, die Differenz zwischen dem vorgegebenen Combining-Koeffizienten und dem tatsächlich eingestellten festzustellen, das heisst die effektive Einstellung zu bestimmen. Vorzugsweise wird das Ausgangssignal der Combining-Schaltung leitungsgebunden zu einem Mischer und ZF-Filter geführt. Der Signalfluß ist also sozusagen in einer zu Fig. 1 entgegengesetzten Richtung.

Zusammenfassend ist festzustellen, dass es durch die Erfindung möglich wird, größere Toleranzen und Imperfektionen eines Combiners zu beherrschen, um vorgegebene optimale Combining-Koeffizienten korrekt einstellen zu können. Die Kompensation erfolgt automatisch im Sender/Empfänger neben dem ordentlichen Betrieb des Gerätes. Die Kennlinien der Combining-Schaltung lassen sich iterativ bestimmen und nachführen.

## Patentansprüche

1. Verfahren zum Kompensieren von Fehlern beim Einstellen von Combining-Koeffizienten einer Combining-Schaltung (3) für eine Mehrzahl von Antennen (1.1, 1.2, 1.3), dadurch gekennzeichnet, daß während den Sende- bzw. Empfangspausen mehrere verschiedene Combining-Koeffizienten eingestellt werden, daß ein Testsignal über die Combining-Schaltung (3) geführt wird, daß anhand des Testsignals ein Meßwert des jeweiligen Combining-Koeffizienten bestimmt wird und daß dieser abgespeichert wird, um während einer späteren Sende- bzw. Empfangsphase beim Einstellen eines bestimmten Wertes eines Combining-Koeffizienten berücksichtigt zu werden.

2. Verfahren nach Anspruch 1, dadurch gekennzeichnet, daß das Testsignal von einer Sendeantenne (18) an die Mehrzahl von Empfangsantennen (1.1, 1.2, 1.3) übertragen wird, um dann über die Combining-Schaltung (3) geführt zu werden.

3. Verfahren nach Anspruch 1, dadurch gekennzeichnet, daß das Testsignal von einem lokalen Oszillator (10) erzeugt und von dort leitungsgebunden über die Combining-Schaltung (3) geführt wird.

4. Verfahren nach einem der Ansprüche 1 bis 3, dadurch gekennzeichnet, daß wiederholt - insbesondere regelmäßig - zwischen einem Sende -bzw. Empfangsmodus und einem Kalibriermodus automatisch umgeschaltet wird.

5. Verfahren nach einem der Ansprüche 1 bis 4, dadurch gekennzeichnet, daß das Testsignal eine unmodulierte Trägerschwingung ist.

6. Schaltungsanordnung mit einer Mehrzahl von Antennen (1.1, 1.2, 1.3) zum Senden bzw. Empfangen von insbesondere modulierten Signalen, gekennzeichnet durch eine Schaltung zum Erzeugen eines Testsignals, welches über die Combining-Schaltung (3) geführt werden kann.

7. Schaltungsanordnung nach Anspruch 6, dadurch gekennzeichnet, daß ein Ausgang der Schaltung zum Erzeugen des Testsignals leitungsgebunden mit einem Eingang der Combining-Schaltung (3) verbunden ist.

8. Schaltungsanordnung nach Anspruch 6, dadurch gekennzeichnet, daß die Schaltung zum Erzeugen des Testsignals mit einer Sendeantenne (18) verbunden ist, um das Testsignal auf die Empfangsantennen einzustrahlen.

9. Schaltungsanordnung nach Anspruch 6, dadurch gekennzeichnet, daß sie Mittel zum Erzeugen eines QAM- oder GMSK-modulierten Signals umfaßt.
